# EUROPEAN PATENT SPECIFICATION

(11) **EP 0 878 651 B1**
(45) Date of publication and mention of the grant of the patent: **27.10.2004**
(21) Application number: 97305806.8
(22) Date of filing: 01.08.1997
(51) Int. Cl.: F16K 31/02

(54) **Fluid flow regulating valve**
Durchflussregelventil
Soupape de régulation de débit

(30) Priority: 17.05.1997 KR 9719124
(43) Date of publication of application: 18.11.1998
(73) Proprietor: Samsung Electronics Co., Ltd., Suwon-si, Gyeonggi-do 442-742 (KR)
(72) Inventor: Baek, Oh-Hyun, Seoul (KR); Hwang, Woong-Lin, Gunpo-city, Kyungki-Do, (KR); Moon, Jae-Ho, Seoul (KR)
(74) Representative: Woodward, John Calvin

(56) References cited:
- FR-A- 2 145 323
- GB-A- 2 258 714
- US-A- 4 235 413
- US-A- 4 943 032
- PATENT ABSTRACTS OF JAPAN vol. 010, no. 014 (M-447), 21 January 1986 & JP 60 175890 A (MATSUSHITA DENKI SANGYO), 10 September 1985,

## Description

The present invention relates to a fluid flow regulating valve, and more particularly, to a fluid flow regulating valve using a thermal expansion material which can precisely regulate the flow of large and small amounts of fluid. Such a flow regulating valve is known from FR-A-2145323 (see preamble of claim 1), which comprises a body provided with inlet and outlet ports, control means in said body comprising a container defining a chamber having an open end and containing a thermally expandable material displaceable towards the outlet port when said thermally expandable material expands to regulate the degree of opening of said outlet port, heating means in the chamber for heating the thermally expandable material and a bellows having a peripheral outer portion attached to the container and a peripheral inner plate portion bounded by the peripheral portion by means of the bellows portion.

A conventional flow regulating valve using a thermal material, as disclosed in US patent No. 4943032 (see preamble of claim 1), is shown in the accompanying Figure 9 of the present application as comprising a first silicon wafer 12, a Pyrex wafer 22 attached on an upper side of the first silicon wafer 12, and a second silicon wafer 30 attached on a lower side of the first silicon wafer 12. A chamber 10 for receiving a thermal expansion material is etched in the first silicon wafer 12 and a cavity for receiving a heater 21 is etched in an area between the chamber 10 and the Pyrex wafer 22. A thickness (h) is provided in an area 12a between the first silicon wafer 12 and the chamber 10 etched therein which is extremely thin, i.e. only a few µm. Also, a slot 44 for allowing the flow of fluid is formed in an area where the first silicon wafer 12 and the second silicon wafer 30 are attached, and a nozzle 32 is etched in the second silicon wafer 30 at a location next to the area 12a under the chamber 10.

With regard to the operation of the above fluid regulator, when light is supplied to the Pyrex wafer 22 through a light pipe 19 or when the heater 21 is operated, the material contained in the chamber 10 expands. This causes the area 12a of the first silicon wafer 12 to expand, as it is the thinnest part thereof, in a direction toward the nozzle 32. As a result, fluid entering through inlet port 46 travels along the indicated path to the nozzle 32 through the slot 44 which is regulated according to the degree of expansion of the area 12a under the chamber 10.

In the above prior art valve, the heater 21, chamber 10, and slot 44 are either etched or go through a microscopic silicon process such as a photographic process. However, these processes require the use of very expensive equipment.

Also, the microscopic silicon process is a technique used for valves that regulate only a small flow of fluid. Valves manufactured by this process are used in medical instruments, environmental analysis instruments and the like. As a result, the application of valves made using this process is limited.

To regulate a large flow of fluid, the capacity of both the silicon wafer and the Pyrex wafer for each valve needs to be enlarged. However, this greatly increases manufacturing costs.

Furthermore, since the diameters of the inlet and outlet ports and the slot are processed to have minute dimensions, foreign substances contained in the fluid can easily block passages thereby deteriorating the reliability of the products.

It is an object of the present invention therefore to solve or substantially reduce the above described problems.

It is a further object of the present invention to provide a fluid flow regulating valve which can precisely regulate both small and large flows of fluid, and which is particularly suitable for use in regulating coolant flow in refrigerators or air conditioners.

It is another object of the present invention to provide a fluid flow regulating valve which is inexpensive.

A fluid flow regulating valve according to the present invention is characterised in that a separate expansion plate has a peripheral portion wherein the inner portion of said expansion plate extends across and closes the open end of the chamber and deforms in response to expansion of the thermally expandable material to control the degree of opening of the outlet port.

Preferably, the heating means comprises a heater and the control means includes adiabatic means for preventing heat of the thermal expansion material heated by the heater from being discharged to environment.

According to one embodiment of the present invention, said adiabatic means is made of adiabatic material which covers the control means or just the expansion plate.

According to another embodiment, said adiabatic means comprises a separating member disposed between the heater and the control means so as to prevent the heater from directly contacting said control means.

The control means preferably comprises a supporting plate coupled to the body and an annular wall or compartment hoop, one end of which is attached on the supporting plate while the other end of which is attached on the expansion plate, thereby defining the chamber.

According to yet another embodiment, the control means comprises a supporting plate coupled to the body, the expansion plate being attached to the supporting plate and being configured so as to define the chamber therebetween.

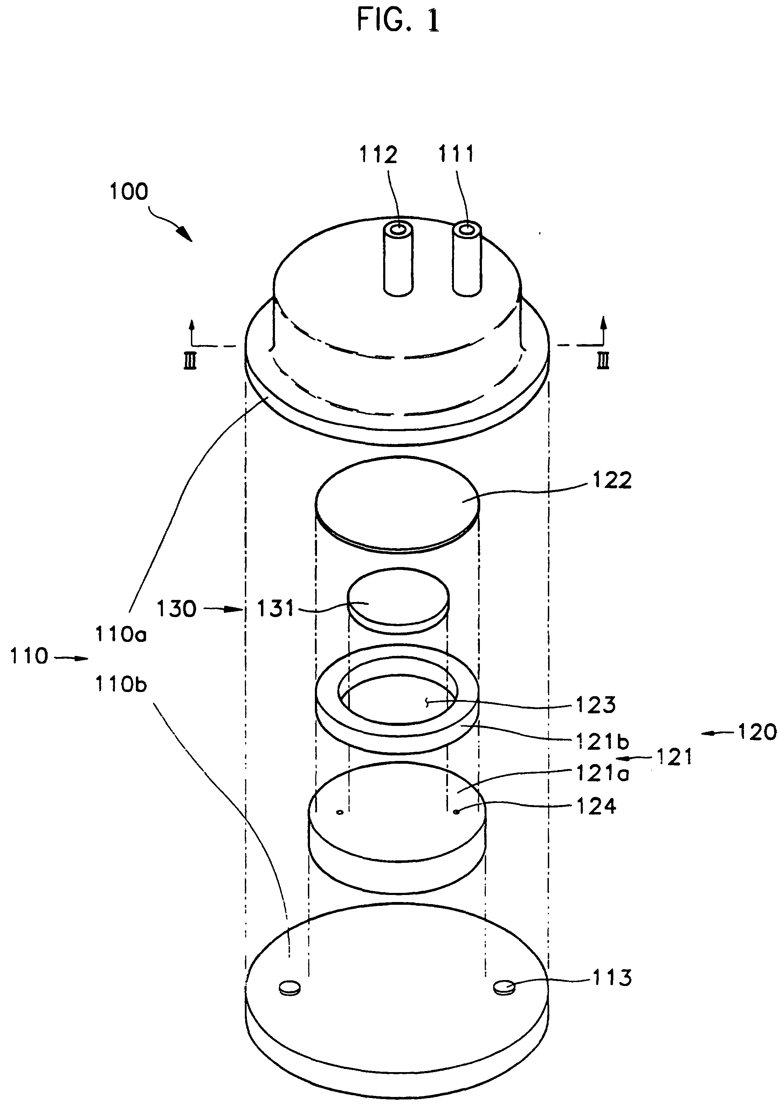

A more complete appreciation of this invention, and many of the advantages thereof, will become more readily apparent with reference to the following details description of several preferred embodiments, by way of example only, with reference to Figures 1 to 8 of the accompanying drawings, in which:
Figure 1 is an exploded perspective view illustrating a flow regulating valve according to a first embodiment of the present invention;
Figure 2 is a sectional view taken along line III-III of Figure 1 when the valve is assembled.
Figure 3 is a sectional view illustrating a flow regulating valve according to a second embodiment of the present invention;
Figure 4 is a sectional view illustrating a flow regulating valve according to a third embodiment of the present invention;
Figure 5 is a sectional view illustrating a flow regulating valve according to a fourth embodiment of the present invention;
Figure 6 is a sectional view illustrating a flow regulating valve according to a fifth embodiment of the present invention;
Figure 7 is a sectional view illustrating a flow regulating valve according to a sixth embodiment of the present invention;
Figure 8A is a sectional view illustrating a flow regulating valve according to a seventh embodiment of the present invention;
Figure 8B is an enlarged view illustrating the circled portion "P" of Figure 8A; and

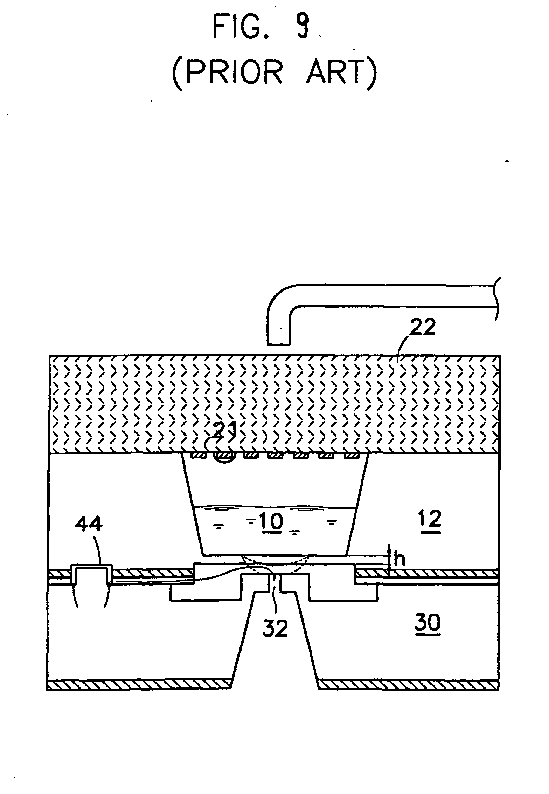

Figure 9 is a view showing a prior art fluid flow regulating valve.

Reference will now be made in detail to the preferred embodiments of the invention, examples of which are illustrated in the accompanying drawings. Wherever possible, the same reference numerals will be used throughout the drawings to refer to the same or like parts.

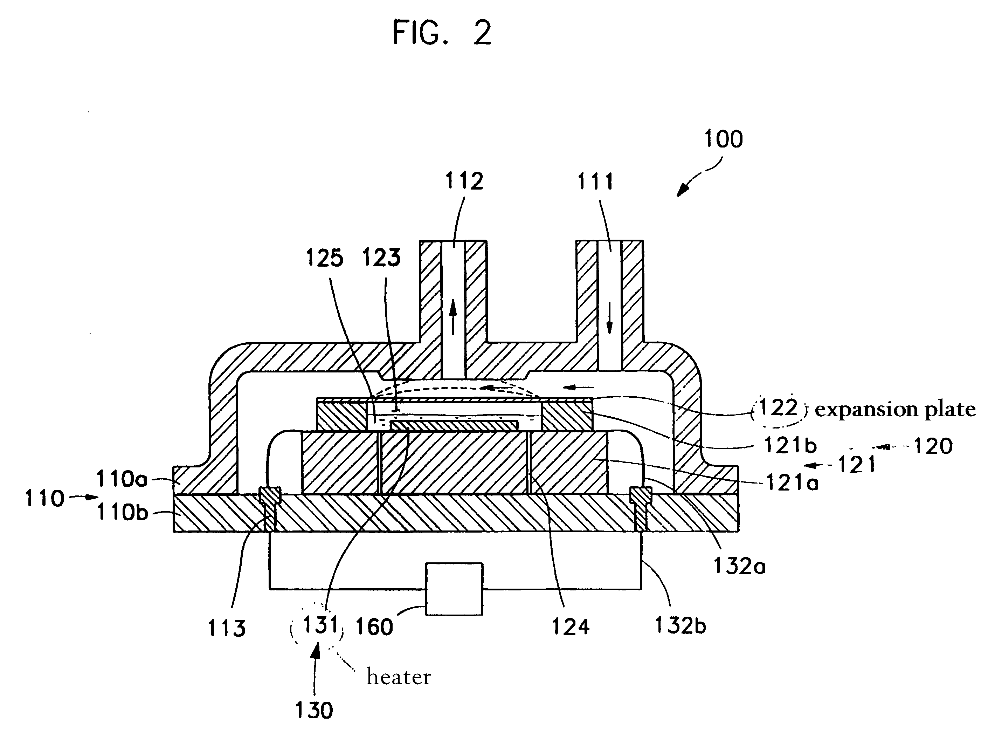

Referring to Figures 1 and 2, there is shown a flow regulating valve 100 which comprises a body 110, displaceable control means in the form of a displacement control part 120 containing a thermal expansion material 125. The thermal expansion material 125 expands when it is heated by the heating member 130. When the thermal expansion material 125 expands, a side of the displacement control part 120 expands to block outlet port 112, thereby regulating the amount of fluid discharged.

In more detail, the body 110 comprises an upper body 110a and a lower body 110b coupled thereto with an enclosed space defined between the upper and lower bodies 110a and 110b. The upper body 110a is provided with an inlet port 111 through which fluid enters the valve 100 and the outlet port 112 through which the fluid is discharged. The outlet port 112 protrudes from the inside surface of the upper body 110a so that it can be disposed closer to the displacement control part 120. A terminal 113 is provided in the lower body 110b and connects power supply 160 to the heating member 130.

The displacement control part 120 comprises a container 121 for the thermal expansion material and an expansion plate 122 coupled to the container 121.

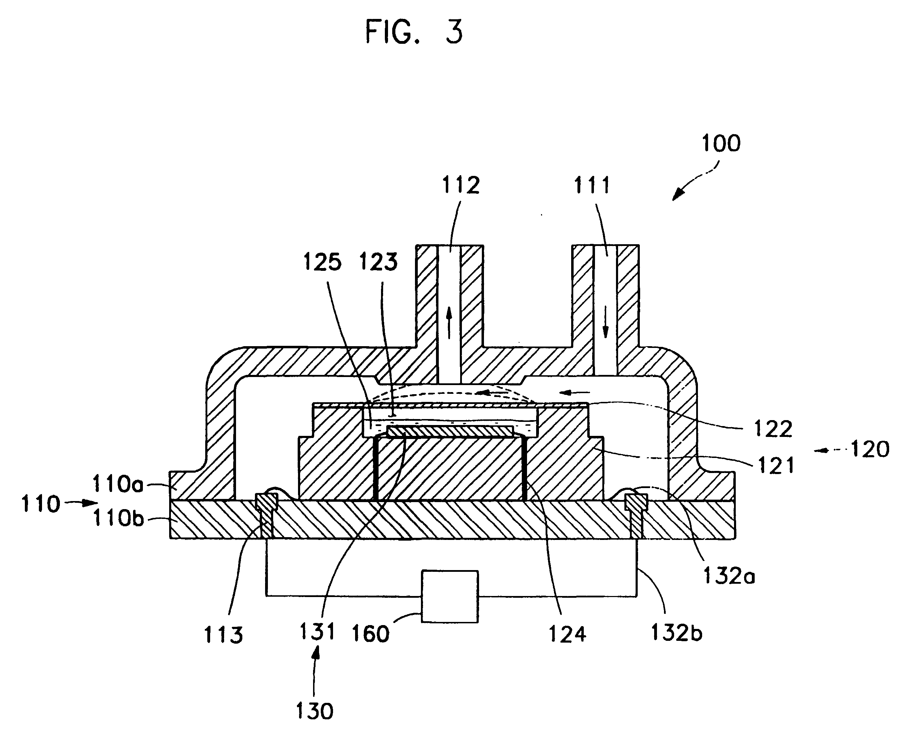

The container 121 shown in Figures 1 and 2, includes a supporting plate 121a coupled to the lower body 110b and an annular member in the form of a compartment hoop 121 b attached on the supporting plate 121a and defining a space in which the thermal expansion material 125 is contained. The expansion plate 122 is provided on the annular member hoop 121b. As shown in Figure 3 illustrating a second embodiment of the present invention, the container 121 can be formed as an integral body defining a space 123 within which the thermal expansion material 125 is contained.

Referring again to Figure 2, the expansion plate 122 is attached on the annular member 121b so that it is positioned opposite the outlet port 112.

The expansion plate 122 expands when the thermal expansion material 125 expands. It is preferable that the supporting plate 121a, the annular member 121b, and the expansion plate 122 are attached to each other using acrylic resin or by brazing.

When the thermal expansion material contained within the space 123 is heated, pressure within the space 123 is increased by gas generated from the thermal expansion material 125. At this point, since the thermal expansion material 125 is enclosed within the airtight space 123, the expansion plate 122 is expanded or displaced due to the increase in pressure and the expansion plate 122 expands toward the outlet port 122, and, consequently, comes into contact with it and closes it.

As the clearance between the outlet port 112 and the expansion plate 112 can be varied, so the amount of fluid exhausted through the outlet port 112 can also be varied. By regulating the voltage applied to the heating member 130, the amount of fluid exhausted through the outlet port 112 can be regulated. For instance, when a large voltage is applied to the heating member 130, the expansion plate 122 is expanded and reduces the size of the outlet port 112, thereby allowing only a small amount of fluid to be exhausted. The body 110 functions as a passage through which the fluid flows, while the expansion plate 122 functions as a regulator for regulating a sectional area of the passage.

Formed through the supporting plate 121a are injection ports 124 through which the thermal expansion material can be injected into the space 123. After hermetically enclosing the space 123 with the supporting plate 121a, the annular wall 121b and the expansion plate 122, the thermal expansion material 125 is injected into the space 123 through the injection ports 124. Preferably, the thermal expansion material is a fluorine composition which is expandable at a relatively low temperature and does not easily react to or with other materials.

The heating member 130 is mounted within the displacement control part 120 and includes a heater 131 which generates heat when a voltage is applied thereto from an electric power source 160. The heater 131 is electrically connected to the terminal 113 by electric wire 132a, and the terminal 113 is electrically connected to the electric power source 160 by another wire 132b, thereby allowing the application of a voltage to the heater 131. The electric wire 132a passes through a contacting portion of the supporting plate 121a and the annular wall 121b as shown in Figure 2, or passes through the injection port 124 formed on the container 121 as shown in Figure 3.

Preferably, the displacement control part is made of material selected from the group consisting of metal and ceramic, both of which have high pressure-resistance characteristics.

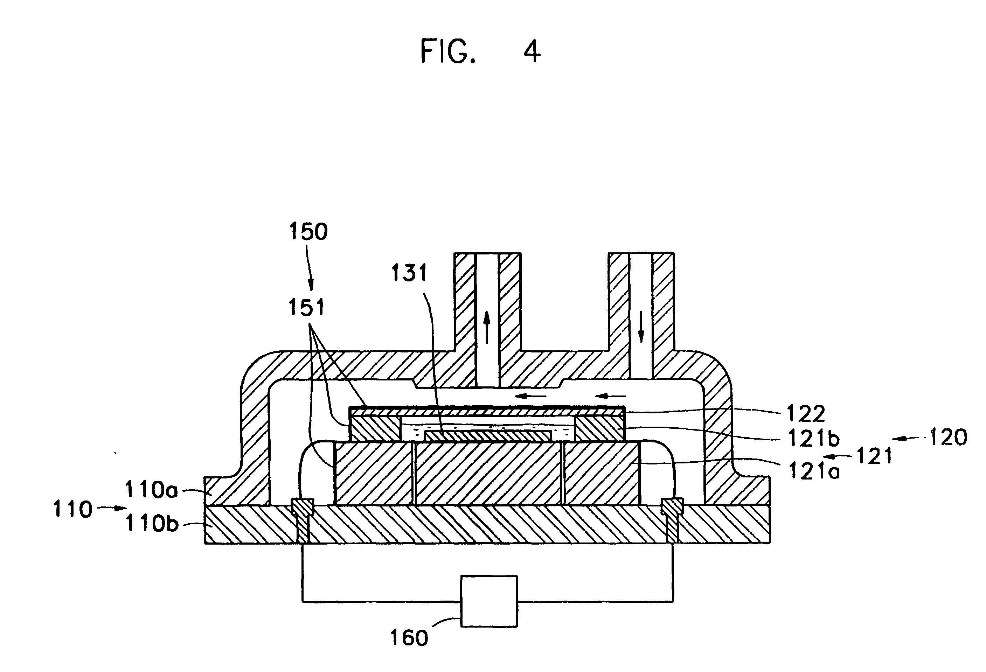

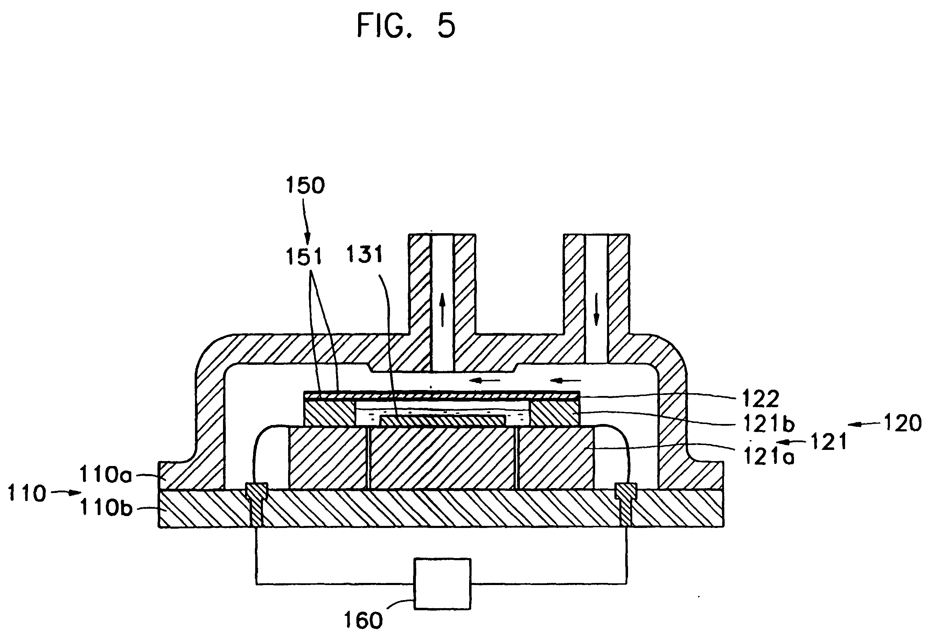

Figures 4 and 5 show third and fourth embodiments of the present invention, respectively. The fluid flow regulating valves in these embodiments may have adiabatic means which can prevent heat generated by the heater 131 from being discharged into the environment.

An adiabatic material 151 may be deposited or coated on the whole outer surface of the displacement control part 120 as shown in Figure 4, or deposited or coated on only the expansion plate 122 as shown in Figure 5, if the supporting plate 121a and the compartment hoop 121b are formed having thicknesses sufficient to retain heat.

As described above, since the adiabatic member 150 is provided on the displacement control part 120, heat generated by the heater 131 cannot be discharged to the environment.

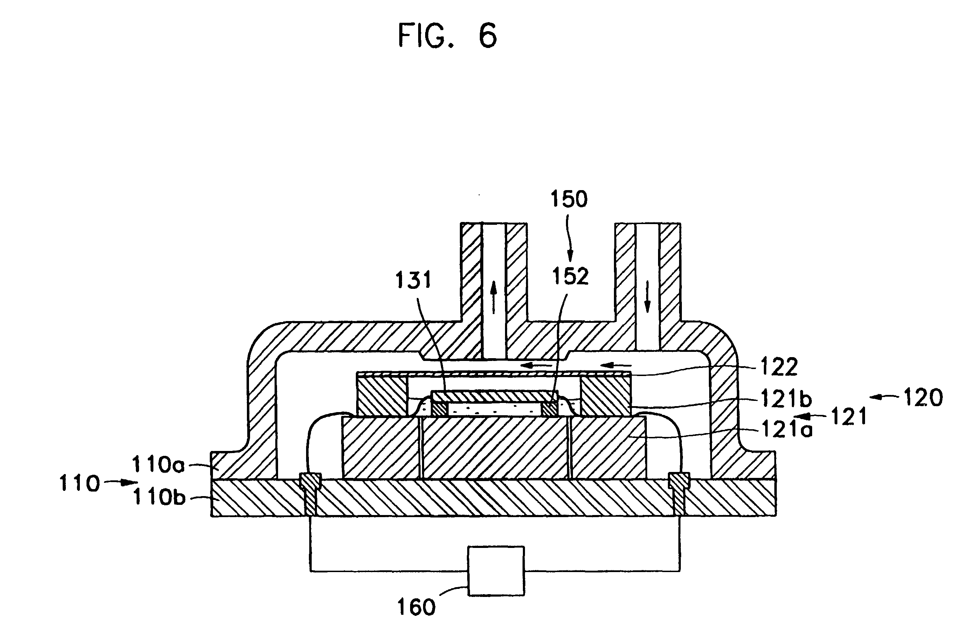

Figure 6 shows a fifth embodiment of the present invention in which a separating member 152 is provided as the adiabatic means between the heater 131 and the supporting plate 121a so that heat cannot directly contact the supporting plate 121a. Since the separating member 152 is disposed between the heater 131 and the container 121, any heat generated from the heater 131 cannot be directly transmitted to the supporting plate 121a, thereby obtaining an adiabatic effect.

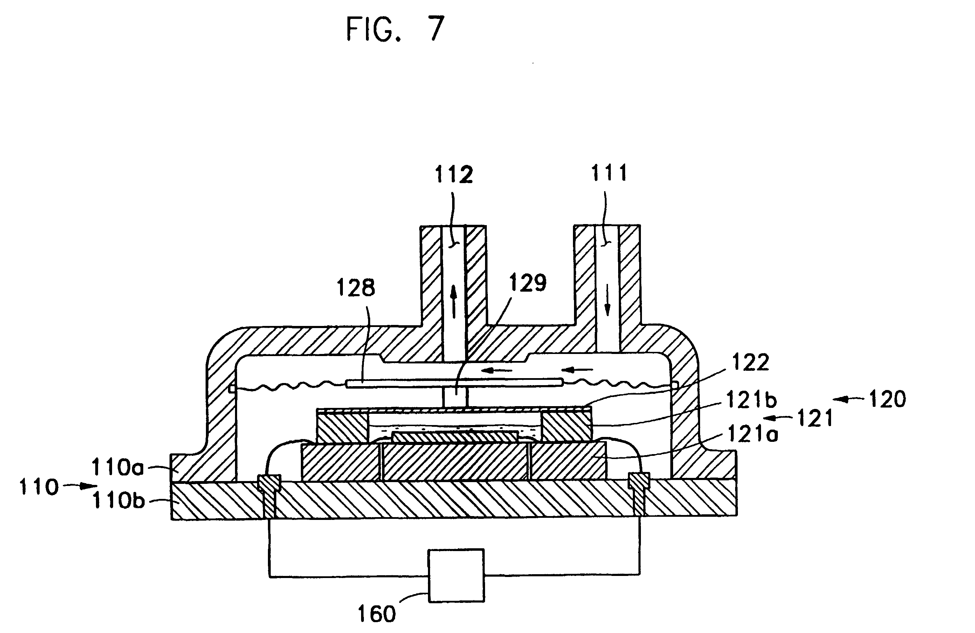

If a large difference in temperature between fluid directed to the body 110 and the displacement control part 120 results, since heat exchange between the fluid and the displacement control part 120 occurs, the amount of expansion of the expansion plate 122 cannot be precisely controlled. To prevent this, Figure 7 shows a sixth embodiment of the present invention in which an auxiliary expansion plate 128 is provided between the inlet and outlet ports 111 and 112. The auxiliary expansion plate 128 is connected to the expansion plate 122 by a connecting member 129 and expands as much as the expansion plate 112. Therefore, when the expansion plate 122 expands, the opening of the outlet port 112 is regulated by the auxiliary expansion plate 128.

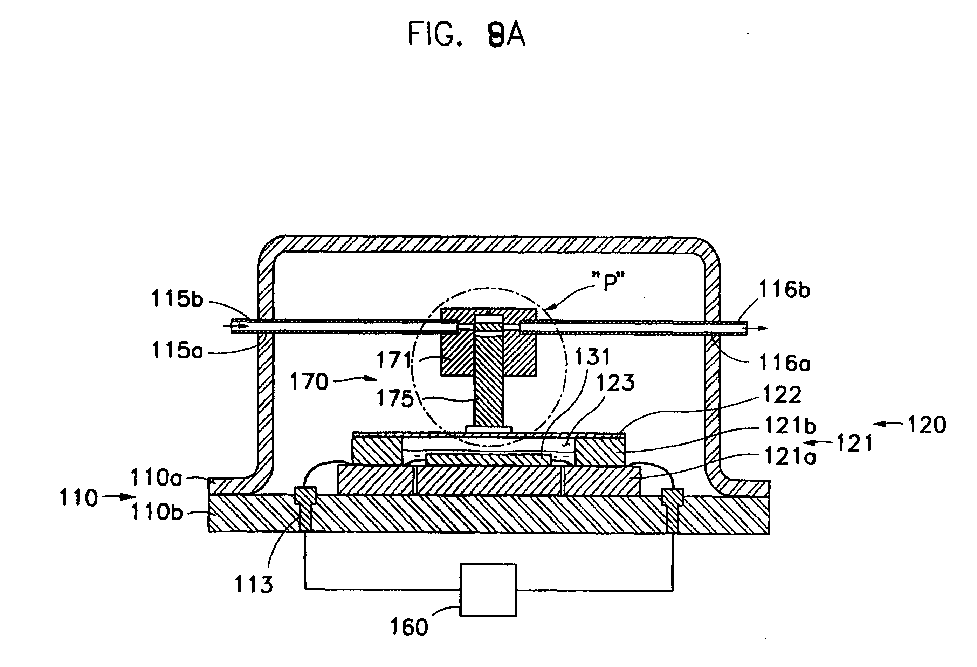

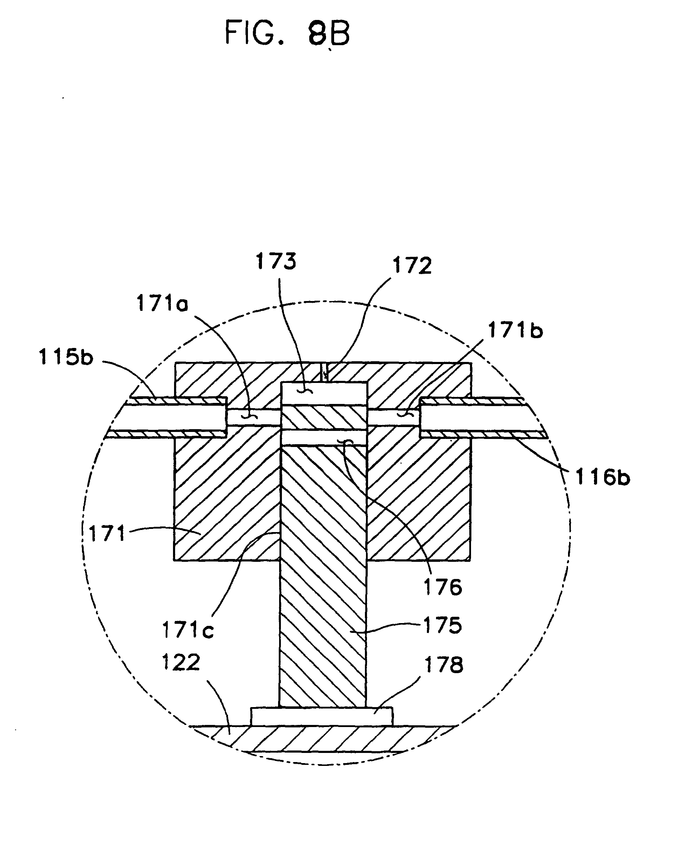

Figures 8A and 8B illustrate a seventh embodiment of the present invention in which the valve is designed to place the inlet port 115a in communication with the outlet port 116a from a normal closed position thereof.

As in the preceding embodiments, the body 110 comprises the upper and lower bodies 110a and 110b. The upper body 110a is provided with the inlet and outlet ports 115a and 116a. Inlet and outlet tubes 115b and 116b respectively pass through the inlet and outlet ports 115a and 116a.

Terminal 113 is provided on the lower body 110b and the container 121 has heater 131 attached on the upper surface of the lower body 110b. Attached on the upper surface of the container 121 is the expansion plate 122 for hermetically enclosing the space defined by the container 121. Provided on the expansion plate 122 is a valve member 170 for selectively placing the inlet port 115a and the outlet port 116 in communication with each other. The valve member 170 comprises a sleeve 171 supported by the inlet and outlet tubes 115b and 116b and a spool 175 for selectively placing the inlet tube 115b and the outlet tube 116b in communication with each other while reciprocating in accordance with the degree of the expansion of the expansion plate 122.

Formed through the sleeve 171 are inlet and outlet passages 171a and 171b (see Figure 8B). The inlet passage 171a communicates with the outlet passage 171b through hollow portion 171c of the sleeve 171. The inlet and outlet tubes 115b and 116b are inserted into the inlet and outlet passages 171a and 171b, respectively. With this structure, the sleeve 171 is supported by the inlet and outlet tubes 115b and 116b. An exhaust hole 172 is formed on a portion of the sleeve above the inlet and outlet passages 171a and 171b which allows the spool 175 to smoothly reciprocate by preventing a vacuum being formed in the space defined between the sleeve 171 and the spool 175.

One end of the spool 175 is inserted into the hollow portion 171c, while the other end is coupled to the expansion plate 122. Therefore, when the expansion plate 122 is displaced toward the sleeve 171 by the expansion of the thermal expansion material, the spool 175 rises, and when the thermal expansion material is returned to its initial condition, the spool 175 returns to its initial portion. The upper end of the spool 175 is positioned above the inlet and outlet passages 171a and 171b. A communicating passage 176 is formed at an appropriate position such that the inlet passage 171a is disconnected with the outlet passage 171b in the normal closed position of the spool 175, while the inlet passage 171a communicates with the outlet passage 171b in the raised position of the spool 175. The communicating area of the inlet and outlet passages 171a and 171b is therefore varied according to how high the spool 175 rises, thereby regulating the amount of the fluid. The spool 175 is connected to the expansion plate 122 by a connecting member 178.

## Claims

1. A fluid flow regulating valve comprising a body (110) provided with inlet and outlet ports (111,112), control means (120) in said body (110) comprising a container (121) defining a chamber (123) having an open end and containing a thermally expandable material (125) displaceable towards the outlet port (112) when said thermally expandable material (125) expands to regulate the degree of opening of said outlet port (112) and heating means (131) in the chamber (123) for heating the thermally expandable material (125) **characterised in that** a separate expansion plate (122) has a peripheral portion attached to the container (121) and an inner portion bounded by the peripheral portion wherein the inner portion extends across and closes the open end of the chamber (123) and deforms in response to expansion of the thermally expandable material (125) to control the degree of opening of the outlet port (112).

2. A fluid flow regulating valve according to claim 1 **characterised in that** the heating means (131) comprises a heater and the control means (120) includes adiabatic means (151) for preventing heat generated by the thermally expandable material (125) when heated by the heater (131) from being discharged to the ambient environment.

3. A fluid flow regulating valve according to claim 2, **characterised in that** said adiabatic means (151) is made of an adiabatic material and covers the control means (120).

4. A fluid flow regulating valve according to claim 2, **characterised in that** said adiabatic means is made of an adiabatic material and covers the expansion plate.

5. A fluid flow regulating valve according to claim 2, **characterised in that** said adiabatic means (151) comprises a separating member (152) disposed between the heater (131) and the control means (120) to prevent the heater (131) from directly contacting said control means (120).

6. A fluid flow regulating valve according to any preceding claim **characterised in that** the control means (120) comprises a supporting plate (121a) coupled to the body (110) and an annular member (121b) one end of which is attached to the supporting plate (121 a), the expansion plate (122) being disposed on the other end of the annular member (121b) to define the chamber (123).

7. A fluid flow regulating valve according to claim 1 **characterised in that** the control means (120) comprises a supporting plate (121a) coupled to the body (110), the expansion plate (122) being attached to the supporting plate (121 a) and being configured so as to define the chamber (123) therebetween.

8. A fluid flow regulating valve according to claim 6 or 7, **characterised in that** the supporting plate (121a) is provided with an injection hole (124) for injection of the thermally expandable material (125) into the chamber (123).

9. A fluid flow regulating valve according to claim 1 **characterised by** an auxiliary expansion plate (128) for regulating the degree of opening of the outlet port (112) mounted on the expansion plate (122) and displaceable towards the outlet (112) when the expansion plate (122) expands to thereby exchange between fluid directed into the body (110) and the control means (120).

10. A fluid flow regulating valve as claimed in claim 1 **characterised by** a movable communicating control member (171) mounted on the expansion plate (122) for communicating or disconnecting the inlet and outlet ports (115a,116) with each other when the expansion plate (122) expands or contracts.

11. A fluid flow regulating valve according to claim 10, **characterised in that** the control means (120) comprises a supporting plate (121a) coupled to the body (110), a wall (121b) attached to the supporting plate (121a) and the expansion plate (122) attached to the wall (121 b) to define the chamber (123) therebetween.

12. A fluid flow regulating valve according to claim 11, **characterised in that** the supporting plate (121a) is provided with an injection hole (124) for the injection of the thermally expandable material (115) into the chamber (123).

13. A fluid flow regulating valve according to claim 10 further **characterised by** inlet and outlet tubes (115a,116b) respectively inserted into the inlet and outlet ports (115a,116), wherein said communicating control member (171) comprises a sleeve having inlet and outlet passages (171a,171b) therein respectively connectable to the inlet and outlet tubes (115b,116b) for selectively placing the inlet and outlet tubes (115b,116b) in communication with each other, said sleeve (171) being supported by the inlet and outlet tubes (115b,116b) and a spool (175) having a first end coupled to the expansion plate (122,127) and a second end inserted into the sleeve (171), said spool (175) being movable such that the outlet passage (171b) therein can be selectively placed in communication with the inlet passage (171a).

14. A fluid flow regulating valve according to claim 13 **characterised in that** the sleeve (171) is provided with an exhaust hole (172) for preventing a vacuum being formed in a space within the sleeve (171).

15. A fluid flow regulating valve according to claim 14 wherein the spool (175) is provided with a communicating hole (176) for connecting the inlet passage (171a) to the outlet passage (171b).

## Patentansprüche

1. Fluiddurchfluss-Regelventil mit einem Körper (110), der mit einer Einlass- und einer Auslassöffnung (111, 112) versehen ist, einem Steuermittel (120) in dem Körper (110) das einem Behälter (121) aufweist, der eine Kammer (123) mit einem offenen Ende festlegt und ein wärmeausdehnbares Material (125) enthält, das in Richtung der Auslassöffnung (112) verschiebbar ist, wenn sich das wärmeausdehnbare Material (125) ausdehnt, um den Grad der Öffnung der Auslassöffnung (112) zu steuern, und einem Heizmittel (131) in der Kammer (123) zum Erhitzen des wärmeausdehnbaren Materials (125), **dadurch gekennzeichnet, dass** eine separate Ausdehnungsplatte (122) einen Umfangsteil, der am Behälter (121) angebracht ist, und einen inneren Teil, der durch den Umfangsteil begrenzt ist, aufweist, wobei sich der innere Teil über das offene Ende der Kammer (123) erstreckt und dieses schließt und sich als Reaktion auf die Ausdehnung des wärmeausdehnbaren Materials (125) verformt, um den Grad der Öffnung der Auslassöffnung (112) zu steuern.

2. Fluiddurchfluss-Regelventil nach Anspruch 1, **dadurch gekennzeichnet, dass** das Heizmittel (131) eine Heizvorrichtung umfasst und das Steuermittel (120) ein adiabatisches Mittel (151) zum Verhindern, dass Wärme, die durch das wärmeausdehnbare Material (125) erzeugt wird, wenn es durch die Heizvorrichtung (131) erhitzt wird, in die Umgebung abgeführt wird, umfasst.

3. Fluiddurchfluss-Regelventil nach Anspruch 2, **dadurch gekennzeichnet, dass** das adiabatische Mittel (151) aus einem adiabatischen Material besteht und das Steuermittel (120) bedeckt.

4. Fluiddurchfluss-Regelventil nach Anspruch 2, **dadurch gekennzeichnet, dass** das adiabatische Mittel aus einem adiabatischen Material besteht und die Ausdehnungsplatte bedeckt.

5. Fluiddurchfluss-Regelventil nach Anspruch 2, **dadurch gekennzeichnet, dass** das adiabatische Mittel (151) ein Trennelement (152) umfasst, das zwischen der Heizvorrichtung (131) und dem Steuermittel (120) angeordnet ist, um zu verhindern, dass die Heizvorrichtung (131) das Steuermittel (120) direkt berührt.

6. Fluiddurchfluss-Regelventil nach einem vorangehenden Anspruch, **dadurch gekennzeichnet, dass** das Steuermittel (120) eine Stützplatte (121a), die mit dem Körper (110) gekoppelt ist, und ein ringförmiges Element (121b), von welchem ein Ende an der Stützplatte (121a) befestigt ist, umfasst, wobei die Ausdehnungsplatte (122) am anderen Ende des ringförmigen Elements (121b) angeordnet ist, um die Kammer (123) festzulegen.

7. Fluiddurchfluss-Regelventil nach Anspruch 1, **dadurch gekennzeichnet, dass** das Steuermittel (120) eine Stützplatte (121a) umfasst, die mit dem Körper (110) gekoppelt ist, wobei die Ausdehnungsplatte (122) an der Stützplatte (121a) befestigt ist und so ausgelegt ist, dass sie die Kammer (123) dazwischen festlegt.

8. Fluiddurchfluss-Regelventil nach Anspruch 6 oder 7, **dadurch gekennzeichnet, dass** die Stützplatte (121a) mit einem Einleitungsloch (124) zum Einleiten des wärmeausdehnbaren Materials (125) in die Kammer (123) versehen ist.

9. Fluiddurchfluss-Regelventil nach Anspruch 1, **gekennzeichnet durch** eine Hilfsausdehnungsplatte (128) zum Steuern des Grades der Öffnung der Auslassöffnung (112), welche an der Ausdehnungsplatte (122) montiert und in Richtung des Auslasses (112) verschiebbar ist, wenn sich die Ausdehnungsplatte (122) ausdehnt, um **dadurch** einen Wärmeaustausch zwischen in den Körper (110) geleitetem Fluid und dem Steuermittel (120) zu verhindern.

10. Fluiddurchfluss-Regelventil nach Anspruch 1, **gekennzeichnet durch** ein an der Ausdehnungsplatte (122) montiertes, bewegliches Verbindungssteuerelement (171) zum Verbinden oder Trennen der Einlass- und der Auslassöffnung (115a, 116) miteinander bzw. voneinander, wenn sich die Ausdehnungsplatte (122) ausdehnt oder zusammenzieht.

11. Fluiddurchfluss-Regelventil nach Anspruch 10, **dadurch gekennzeichnet, dass** das Steuermittel (120) eine Stützplatte (121a) umfasst, die mit dem Körper (110) gekoppelt ist, wobei eine Wand (121b) an der Stützplatte (121a) befestigt ist und die Ausdehnungsplatte (122) an der Wand (121b) befestigt ist, um die Kammer (123) dazwischen festzulegen.

12. Fluiddurchfluss-Regelventil nach Anspruch 11, **dadurch gekennzeichnet, dass** die Stützplatte (121a) mit einem Einleitungsloch (124) für das Einleiten des wärmeausdehnbaren Materials (115) in die Kammer (123) versehen ist.

13. Fluiddurchfluss-Regelventil nach Anspruch 10, ferner **gekennzeichnet durch** eine Einlass- und eine Auslassröhre (115a, 116b), die in die Einlass- bzw. die Auslassöffnung (115a, 116) eingesetzt sind, wobei das Verbindungssteuerelement (171) eine Hülse mit einem Einlass- und einem Auslassdurchgang (171a, 171b) darin umfasst, die mit der Einlass- bzw. der Auslassröhre (115b, 116b) verbindbar sind, um die Einlass- und die Auslassröhre (115b, 116b) selektiv miteinander in Verbindung zu bringen, wobei die Hülse (171) **durch** die Einlass- und die Auslassröhre (115b, 116b) und eine Spule (175) mit einem ersten Ende, das mit der Ausdehnungsplatte (122, 127) gekoppelt ist, und einem zweiten Ende, das in die Hülse (171) eingesetzt ist, abgestützt wird, wobei die Spule (175) derart beweglich ist, dass der Auslassdurchgang (171b) in dieser selektiv mit dem Einlassdurchgang (171a) in Verbindung gebracht werden kann.

14. Fluiddurchfluss-Regelventil nach Anspruch 13, **dadurch gekennzeichnet, dass** die Hülse (171) mit einem Auslassloch (172) versehen ist, um zu verhindern, dass in einem Raum innerhalb einer Hülse (171) ein Vakuum gebildet wird.

15. Fluiddurchfluss-Regelventil nach Anspruch 14, wobei die Spule (175) mit einem Verbindungsloch (173) zum Verbinden des Einlassdurchgangs (171a) mit dem Auslassdurchgang (171b) versehen ist.

## Revendications

1. Soupape de régulation de débit comprenant un corps (110) muni d'orifices d'entrée et de sortie (111, 112), de moyens de commande (120) dans ledit corps (110) comprenant un récipient (121) définissant une chambre (123) possédant une extrémité ouverte et contenant un matériau thermiquement expansible (125) pouvant se déplacer vers l'orifice de sortie (112) lorsque ledit matériau thermiquement expansible (125) se dilate pour réguler le degré d'ouverture dudit orifice de sortie (112) et des moyens de chauffage (131) situés dans la chambre (123) pour chauffer le matériau thermiquement expansible (125), **caractérisée en ce qu'**une plaque d'expansion séparée (122) possède une partie périphérique fixée au récipient (121) et une partie intérieure limitée par la partie périphérique où la partie intérieure s'étend à travers et ferme l'extrémité ouverte de la chambre (123) et se déforme en réponse à l'expansion du matériau thenniquement expansible (125) pour commander le degré d'ouverture de l'orifice de sortie (112).

2. Soupape de régulation de débit selon la revendication 1, **caractérisée en ce que** les moyen de chauffage (131) comprennent un dispositif de chauffage et les moyens de commande (120) comprennent des moyens adiabatiques (151) pour empêcher la chaleur produite par le matériau thermiquement expansible (125) une fois chauffé par le dispositif de chauffage (131), de se dégager dans l'environnement ambiant.

3. Soupape de régulation de débit selon la revendication 2, **caractérisée en ce que** lesdits moyens adiabatiques (151) sont faits d'un matériau adiabatique et couvrent les moyens de commande (120).

4. Soupape de régulation de débit selon la revendication 2, **caractérisée en ce que** lesdits moyens adiabatiques sont faits d'un matériau adiabatique et couvrent la plaque d'expansion.

5. Soupape de régulation de débit selon la revendication 2, **caractérisée en ce que** lesdits moyens adiabatiques (151) comprennent un élément de séparation (152) disposé entre le dispositif de chauffage (131) et les moyens de commande (120) pour empêcher le dispositif de chauffage (131) d'entrer directement en contact avec lesdits moyens de commande (120).

6. Soupape de régulation de débit selon l'une quelconque des revendications précédentes, **caractérisée en ce que** les moyens de commande (120) comprennent une plaque de support (121a) reliée au corps (110) et un élément annulaire (121b) dont une extrémité est fixée à la plaque de support (121a), la plaque d'expansion (122) étant disposée sur l'autre extrémité de l'élément annulaire (121b) pour définir la chambre (123).

7. Soupape de régulation de débit selon la revendication 1, **caractérisée en ce que** les moyens de commande (120) comprennent une plaque de support (121a) reliée au corps (110), la plaque d'expansion (122) étant fixée à la plaque de support (121a) et étant configurée afin de définir entre elles la chambre (123).

8. Soupape de régulation de débit selon l'une quelconque des revendications 6 ou 7, **caractérisée en ce que** la plaque de support (121a) est munie d'un trou d'injection (124) pour injecter le matériau thermiquement expansible (125) dans la chambre (123).

9. Soupape de régulation de débit selon la revendication 1, **caractérisée par** une plaque d'expansion auxiliaire (128) pour réguler le degré d'ouverture de l'orifice de sortie (112) montée sur la plaque d'expansion (122) et pouvant se déplacer vers la sortie (112) lorsque la plaque d'expansion (122) se dilate pour un échange de ce fait entre le fluide dirigé dans le corps (110) et les moyens de commande (120).

10. Soupape de régulation de débit selon la revendication 1, **caractérisée par** un élément de commande de communication mobile (171) monté sur la plaque d'expansion (122) pour faire communiquer ou déconnecter les orifices d'entrée et de sortie (115a, 116) l'un avec l'autre lorsque la plaque d'expansion (122) se dilate ou se contracte.

11. Soupape de régulation de débit selon la revendication 10, **caractérisée en ce que** les moyens de commande (120) comprennent une plaque de support (121a) reliée au corps (110), une paroi (121b) attachée à la plaque de support (121a) et la plaque d'expansion (122) étant attachée à la paroi (121b) afin de définir entre elles la chambre (123).

12. Soupape de régulation de débit selon la revendication 11, **caractérisée en ce que** la plaque de support (121a) est munie d'un trou d'injection (124) pour injecter le matériau thermiquement expansible (115) dans la chambre (123).

13. Soupape de régulation de débit selon la revendication 10, **caractérisée de plus par** des tubes d'entrée et de sortie (115b, 116b) insérés respectivement dans les orifices d'entrée et de sortie (115a, 116), dans laquelle ledit élément de commande de communication (171) comprend un manchon possédant des passages d'entrée et de sortie (171a, 171b) pouvant être connectés respectivement à l'intérieur aux tubes d'entrée et de sortie (115b, 116b) pour placer sélectivement les tubes d'entrée et de sortie (115b, 116b) en communication l'un avec l'autre, ledit manchon (171) étant supporté par les tubes d'entrée et de sortie (115b, 116b) et un tiroir (175) ayant une première extrémité reliée à la plaque d'expansion (122.127) et une seconde extrémité insérée dans le manchon (171), ledit tiroir (175) pouvant se déplacer de telle sorte que le passage de sortie (171 b) à l'intérieur peut être placé sélectivement en communication avec le passage d'entrée (171a).

14. Soupape de régulation de débit selon la revendication 13, **caractérisée en ce que** le manchon (171) est muni d'un trou d'échappement (172) pour empêcher qu'une dépression ne se forme dans un espace situé à l'intérieur du manchon (171).

15. Soupape de régulation de débit selon la revendication 14, dans laquelle le tiroir (175) est muni d'un trou de communication (176) pour relier le passage d'entrée (171a) au passage de sortie (171b).
